# FASCICULE DE BREVET EUROPEEN

(11) **EP 4 315 157 B1**
(45) Date de publication et mention de la délivrance du brevet: **24.06.2026**
(21) Numéro de dépôt: 22717643.5
(22) Date de dépôt: 29.03.2022
(51) Int. Cl.: G06K 19/06

(54) **PROCÉDÉ ET DISPOSITIF POUR FORMER UNE FIGURE SUR OU DANS UNE PIÈCE**
VERFAHREN UND VORRICHTUNG ZUR BILDERZEUGUNG AUF ODER IN EINEM TEIL
METHOD AND DEVICE FOR FORMING AN IMAGE ON OR IN A PART

(30) Priorité: 29.03.2021 FR 2103171
(43) Date de publication de la demande: 07.02.2024
(73) Titulaire: Qiova, 42160 Andrezieux Boutheon (FR)
(72) Inventeur: LANDON, Sébastien, 42480 La Fouillouse (FR); DI MAIO, Yoan, 42000 Saint Etienne (FR); THIBAULT, Florent, 42170 Saint Just Saint Rambert (FR); DUSSER, Benjamin, 42110 Poncins (FR)
(74) Mandataire: Regimbeau
(86) Numéro de dépôt international: PCT/FR2022/050587
(87) Numéro de publication internationale: WO 2022/208020

(56) Documents cités:
- WO-A1-2016/001335
- WO-A2-2009/114375
- US-A1- 2006 000 814

## Description

### DOMAINE DE L'INVENTION

L'invention concerne le domaine du traitement des matériaux par laser, et notamment du verre, avec un procédé et un système de traitement adapté aux cadences industrielles, permettant par exemple d'effectuer un marquage de produits pour des applications de traçabilité et de lutte anti-contrefaçon.

### ETAT DE LA TECHNIQUE

Dans un contexte de marquage en forte expansion, les technologies lasers existantes ont su largement s'imposer grâce à leur capacité à usiner une grande majorité de matériaux, permettant à la fois de répondre aux problématiques industrielles actuelles tout en démontrant un fort potentiel de valeur ajoutée en fonction des paramètres et des procédés d'exploitation. Il existe cependant certains marchés où les technologies lasers arrivent à leurs limites, à savoir les productions à haute cadence, avec à titre d'exemple les secteurs de l'agro-alimentaire, du pharmaceutique, du fiduciaire ou de l'électronique, soumis de manière générale à la fabrication de produits de petites dimensions en très grande quantité.

Parmi les technologies existantes, certaines utilisent la combinaison d'une source laser, dont les propriétés du rayonnement sont variées (puissance, cadence, énergie, longueur d'onde, durée d'impulsion, etc.), couplée à une tête de déflexion, ou tête scanner galvanométrique. Cette tête permet à la fois la focalisation du faisceau laser, c'est-à-dire la concentration spatiale de celui-ci en un point unique, ainsi que son déplacement contrôlé et automatisé dans l'espace de la pièce à marquer par analogie avec la pointe d'un stylo.

La demande WO2016001335A1 présente une technologie fondée sur l'utilisation d'un faisceau lumineux cohérent traversant un dispositif de modulation optique dynamique pour générer un profil spatial multifaisceau à la surface du matériau à marquer. Une figure formée de plusieurs points peut ainsi être usinée ou marquée à la surface du matériau.

Avec cette technologie, le nombre de points réalisables dans la figure est limité par l'énergie lumineuse maximale par impulsion. Cette énergie maximale peut être elle-même limitée par le seuil de dommage du dispositif de modulation, c'est-à-dire la puissance lumineuse traversant le dispositif au-delà de laquelle il est endommagé. L'énergie maximale peut également être limitée par la puissance maximale émise par les lasers commercialement disponibles.

Par ailleurs, la taille des figures réalisables est également limitée, de sorte qu'il est parfois difficile de réaliser des figures comprenant plus de 150 points et/ou s'étendant sur une surface supérieure à quelques millimètres carrés.

Le document US 2006 000 814 A1 divulgue une méthode de gravure laser pulsée pour réaliser un marquage dans le volume d'un article. Le marquage est réalisé par ablation de la matière lorsqu'une tâche laser y est envoyée, cette tâche laser est déplacée en d'autre lieux de la pièce pour réaliser à chaque fois dans la pièce le motif du marquage. Cependant, le document US 2006 000 814 A1 ne décrit pas que le motif réalisé par la tâche laser comprend au moins deux maxima locaux de contraste. Le document US 2006 000 814 A1 ne divulgue pas non plus que deux motifs réalisés dans la pièce au cours du procédé ne présentent pas de chevauchement.

Le document WO 2009/114375 A2 divulgue un procédé pour réaliser une figure, à une surface ou dans un volume d'une pièce, la figure comprenant une répétition d'un motif, le motif, par exemple, peut être réalisé par deux impacts laser focalisés à deux profondeurs différentes de la pièce. Le document WO 2009/114375 A2 ne divulgue pas que le motif réalisé se situe sur une surface non parallèle à une direction de propagation du faisceau. Le document WO 2009/114375 A2 ne divulgue pas non plus que deux motifs réalisés dans la pièce au cours du procédé ne présentent pas de chevauchement.

Il existe donc un besoin d'un procédé pour marquer une figure à la surface d'un matériau, et notamment du verre, sans être limité par le nombre de points ou la taille de la figure.

### EXPOSE DE L'INVENTION

Un but de l'invention est de proposer un procédé pour traiter, par marquage ou micro-usinage, une figure à la surface ou dans le volume d'un matériau, et notamment du verre, dont les dimensions et/ou le nombre de points compris dans la figure ne sont pas limités en particulier par les caractéristiques techniques de la source laser utilisée et de la matière dont est composée la cible. Le but est atteint dans le cadre de la présente invention grâce à un procédé pour réaliser une figure, à une surface ou dans un volume d'une pièce, la figure comprenant une répétition d'un motif, le procédé comprenant les étapes suivantes :
- réalisation du motif à la surface ou dans le volume de la pièce par conformation et focalisation d'un faisceau cohérent, le motif comprenant au moins deux maxima locaux de contraste;
- exécution au moins une fois d'un cycle d'étapes suivantes:
   -- déplacement relatif du faisceau et de la pièce, et
   -- réalisation du motif à la surface ou dans le volume par conformation et focalisation du faisceau, de sorte que les motifs réalisés ne présentent pas de chevauchement.

Le procédé comprend un cycle d'étapes dont chaque itération comprend l'émission du faisceau lumineux et sa mise en forme de sorte à éclairer un motif laser, à un endroit particulier de la pièce. L'éclairage du motif laser vient marquer la pièce selon le motif qui n'est pas réduit à un point. Précisions ici que le motif n'est pas nécessairement identique au motif laser ; cette différence sera détaillée plus loin. D'une itération à l'autre, l'endroit de la pièce où vient frapper le faisceau lumineux est modifié, de sorte qu'il est possible de réaliser une figure plus étendue que le motif et comprenant plus de points que lui. Le cycle peut être répété à volonté de sorte que les dimensions de la figure finalement réalisée sur la pièce et le nombre de points qu'il contient ne sont pas limités par les caractéristiques techniques de la source laser utilisée et de la matière dont est composée la cible.

Un tel procédé est avantageusement complété par les différentes caractéristiques suivantes prises seules ou en combinaison :
- le motif est formé d'une pluralité de points séparés spatialement ;
- le faisceau cohérent est pulsé, chaque réalisation du motif comprenant l'émission d'une salve d'au moins une impulsion laser, chaque salve comprenant un nombre d'impulsions laser inférieur au nombre de points formant le motif ;
- chaque salve comprend une seule impulsion laser ;
- la figure représente un code à une ou deux dimensions composé d'un ensemble de cellules vides et de cellules remplies, les cellules étant situées à des positions prédéterminées ;
- les cellules remplies comprennent une ou plusieurs fois le motif ;
- le déplacement relatif du faisceau et de la pièce s'opère sur une longueur supérieure à une dimension du motif ;
- le déplacement relatif du faisceau et de la pièce s'opère sur une longueur inférieure à une dimension du motif ;
- la figure comprend une répétition d'un deuxième motif, le deuxième motif comprenant au moins deux maxima locaux de contraste, le procédé comprenant en outre l'exécution des étapes suivantes
   - réalisation du deuxième motif à la surface ou dans le volume de la pièce par conformation et focalisation d'un faisceau cohérent ;
   - exécution au moins une fois d'un cycle d'étapes suivantes :
      -- déplacement relatif du faisceau et de la pièce, et
      -- réalisation du deuxième motif à la surface ou dans le volume par conformation et focalisation du faisceau, de sorte que les deuxièmes motifs réalisés ne présentent pas de chevauchement ;
- la figure comprend un motif supplémentaire formé d'une pluralité de points, le procédé comprenant en outre la réalisation du motif supplémentaire sur la surface ou dans le volume de la pièce par conformation et focalisation d'un faisceau cohérent pulsé, dans lequel la réalisation du motif supplémentaire sur ou dans la pièce comprend l'émission d'un train d'impulsions du faisceau lumineux, chaque train comprenant un nombre fini d'impulsions strictement inférieur au nombre de points formant le motif supplémentaire ;
- la pièce est en verre, en métal, en plastique ou en polymère ;
- lors de la réalisation du motif le procédé comprend une altération par exposition au laser d'une première couche de matériau de sorte à découvrir une deuxième couche située en dessous de la première couche ;
- la réalisation du motif à la surface ou dans le volume s'effectue dans un plan de traitement, le plan de traitement étant séparé d'un plan de focalisation du faisceau laser d'une distance inférieure ou égale à la moitié d'une distance focale d'un dispositif de focalisation, le dispositif de focalisation définissant la position du plan de focalisation ;
- une étape de calcul d'une consigne de modulation à partir d'une consigne d'entrée correspondant au motif, la consigne de modulation étant imposée à un dispositif de modulation pour effectuer la conformation du faisceau.

L'invention porte également sur une pièce comportant une figure réalisée par le procédé tel qu'on vient de le présenter.

L'invention porte enfin sur un système pour réaliser une figure à une surface ou dans un volume d'une pièce, la figure comprenant une répétition d'un motif, le système comprenant :
- un dispositif de réalisation du motif à la surface ou dans le volume de la pièce par conformation et focalisation d'un faisceau cohérent, le motif comprenant au moins deux maxima locaux de contraste ; et
- un dispositif de déplacement relatif du faisceau et de la pièce.

Un tel système est avantageusement complété par les différentes caractéristiques suivantes prises seules ou en combinaison :
- le dispositif de réalisation du motif à la surface ou dans le volume de la pièce par conformation et focalisation d'un faisceau cohérent comprend :
   - une source d'un faisceau lumineux cohérent;
   - un dispositif de modulation optique comprenant des moyens pour moduler dans un plan de modulation le faisceau lumineux selon au moins une modulation de phase, afin de conformer le faisceau lumineux selon un motif laser;
   - un dispositif de focalisation agencé pour focaliser le faisceau lumineux conformé par le dispositif de modulation dans un plan de focalisation, le plan de focalisation étant en configuration de Fourier ou de Fresnel par rapport au plan de modulation du dispositif de modulation,
      le système étant adapté pour recevoir la pièce, de sorte que la réalisation du motif à la surface ou dans le volume s'effectue dans un plan de traitement, le plan de traitement étant séparé du plan de focalisation d'une distance inférieure ou égale à la moitié d'une distance focale du dispositif de focalisation,
      le motif laser étant configuré pour produire un traitement de la pièce selon le motif dans le plan de traitement ;
- le faisceau laser est pulsé ;
- le dispositif de modulation optique comprend une optique de mise en forme fixe ;
- le dispositif de modulation optique et le dispositif de focalisation sont regroupés en un appareil unique ;
- le dispositif de déplacement relatif comprend une tête scanner galvanométrique ;
- le dispositif de déplacement relatif comprend au moins une platine de translation.

### DESCRIPTION DES FIGURES

Nous allons maintenant présenter plusieurs modes de réalisation à titre non limitatif en regard des dessins annexés sur lesquels :

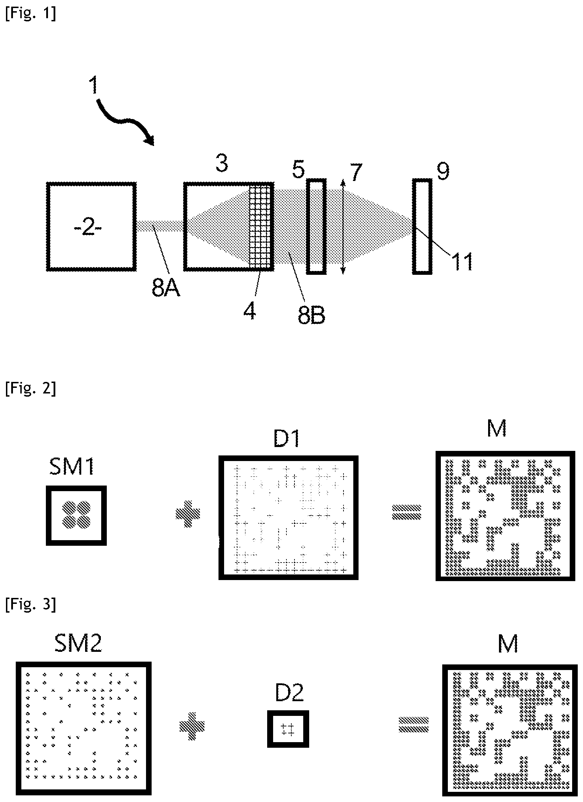

[Fig. 1] la figure 1 est une représentation schématique d'un système pour former une figure selon les différents modes de réalisation de l'invention.
[Fig. 2]
[Fig. 3] les figures 2 et 3 sont des représentations schématiques de deux types de marquages selon respectivement un premier et un deuxième mode de mise en œuvre de l'invention.
[Fig. 4A]

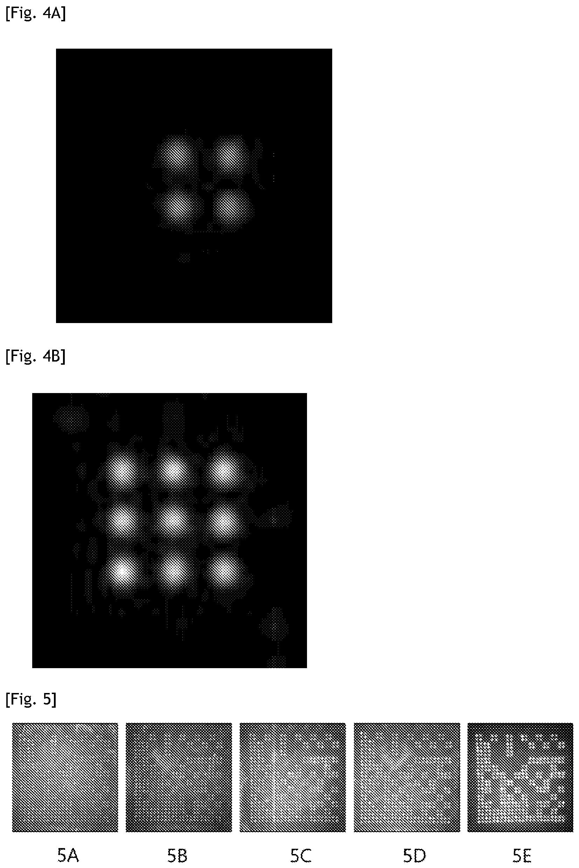

[Fig. 4B] les figures 4A et 4B représentent deux motifs selon le premier mode de réalisation de l'invention.
[Fig. 5]
   La figure 5 comprend les représentations 5A, 5B, 5C, 5D et 5E de marquages réalisés sur verre selon le premier mode de réalisation de l'invention.
[Fig. 6]

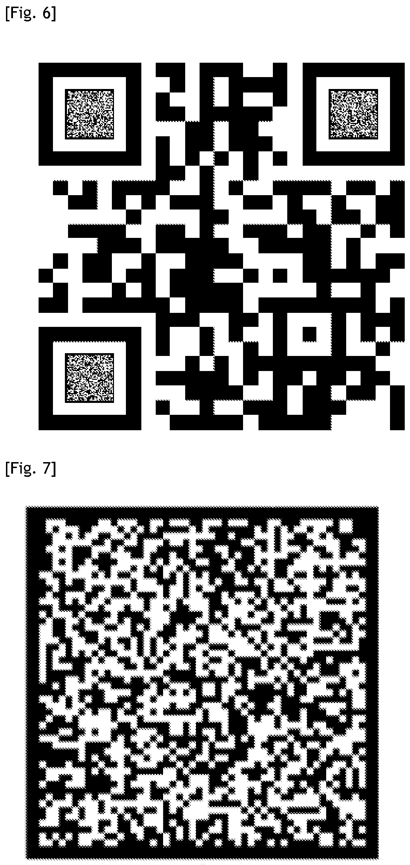

[Fig. 7] les figures 6 et 7 sont des représentations d'un QR-code sécurisé.
[Fig. 8]

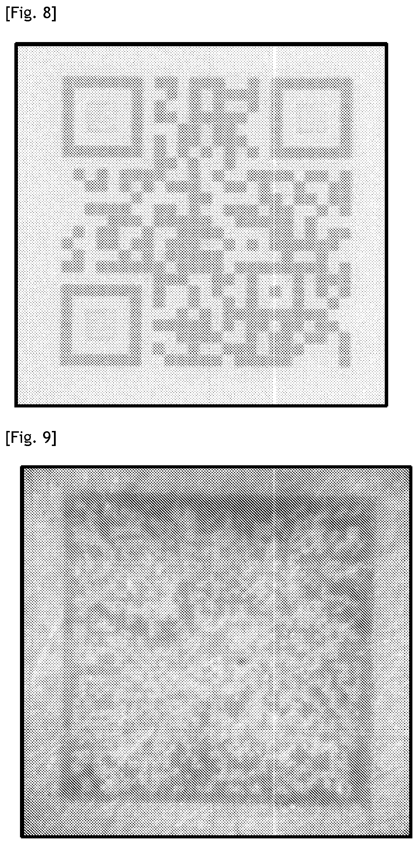

[Fig. 9] les figures 8 et 9 sont des exemples de réalisation d'un QR-code sécurisé selon un troisième mode de réalisation de l'invention.

### DESCRIPTION DETAILLEE DE L'INVENTION

La présente invention porte sur le traitement de matériaux, c'est-à-dire la modification structurelle de matériaux à faible échelle par rapport aux dimensions du matériau, par laser.

On définit une réalisation ou traitement de figure comme un marquage de figure par laser c'est-à-dire une modification du matériau par laser pour générer :
- un contraste optique suivant la figure à la surface ou dans le volume de la pièce, ou bien
- un micro-usinage de figure par laser c'est à dire une modification du matériau par laser pour générer un relief à la surface de la pièce, ou une variation de densité dans le volume de la pièce (par ablation ou ajout de matière) suivant la figure.

Un cas particulier de micro-usinage de figure consiste, dans le cas où le matériau est composé des plusieurs couches de nature différente, en la suppression d'une des couches, pour laisser apparaitre la couche située en dessous. Autrement dit, le traitement comprend lors de la réalisation de la figure une altération par exposition au laser d'une première couche de matériau de sorte à découvrir une deuxième couche située en dessous de la première couche.

Ce cas particulier présente un intérêt lorsque le rendu optique des deux couches (couleur, brillance, etc.) est significativement différent. Ce cas n'est pas limité au traitement des couches les plus extérieures ; on citera à titre d'exemple la suppression d'une couche de peinture colorée sous une couche de vernis afin de laisser apparaitre une autre couche colorée, de teinte différente.

La figure est une distribution spatiale d'une fonction de contraste optique. Une fois traitée, la figure peut être détectée par un moyen de mesure optique. La figure présente une certaine taille et une certaine résolution. La résolution peut être définie comme la taille minimale de détail que l'on peut détecter dans cette figure. La résolution peut être différente dans les trois dimensions ; on parlera en particulier de résolution transverse (c'est-à-dire dans les directions perpendiculaires à la direction de propagation du faisceau laser) et de résolution en profondeur (c'est-à-dire dans la direction de propagation du faisceau laser).

D'une manière générale, la figure s'étend sur une surface qui n'est pas nécessairement plane et qui n'est pas nécessairement confondue avec la surface extérieure de la pièce. La description qui suit est faite au regard de l'exemple particulier de traitement qu'est le marquage en surface, en considérant que la figure s'étend sur une surface de travail plane, mais l'invention n'est en aucun cas limitée à cet exemple particulier et porte sur l'ensemble du domaine du traitement.

La figure à réaliser comprend une répétition d'un motif sans chevauchement.

Un motif est une distribution spatiale d'une fonction de contraste optique sur la surface extérieure de la pièce, distribution notée C(x,y) dépendant des coordonnées spatiales x, y. x et y correspondent à des directions transverses perpendiculaires à la direction de propagation du faisceau. Dans ce cas, le motif s'étend dans un plan perpendiculaire à la direction de propagation du faisceau.

Le motif peut également s'étendre dans un plan incliné par rapport à un plan perpendiculaire à la direction de propagation du faisceau, mais sans être parallèle à la direction de propagation. De manière encore plus générale, la figure peut s'étendre sur une surface qui n'est pas plane mais sans être parallèle à la direction de propagation. Il est alors possible de définir une équation de cette surface plane ou non plane sous la forme z=S(x,y) qui pour tout point de la surface de coordonnées spatiales x, y donne la coordonnée z de ce point, la coordonnée z correspondant à la direction de propagation du faisceau. La distribution C(x,y) donne alors le contraste C(x,y) pour le point de la surface de coordonnées (x, y, z=S(x,y)).

Une répétition du motif est une distribution spatiale obtenue en sommant plusieurs distributions C décalées spatialement les unes par rapport aux autres : C(x+a₁, y+b₁)+ C(x+a₂, y+b₂)+...+C(x+aₙ, y+bₙ).

Une répétition du motif est sans chevauchement, lorsqu'aucune zone de contraste d'une première distribution ne recouvre aucune zone de contraste d'une deuxième distribution. Il n'y aucune superposition entre des zones de contraste de deux distributions différentes. Une zone de contraste d'une distribution est une zone spatiale où la distribution prend des valeurs significativement différentes de zéro, de sorte à pouvoir être identifiée optiquement comme étant une zone différente des lieux où la distribution prend la valeur zéro. Autrement dit, une répétition du motif est sans chevauchement si en un point où une des distributions C sommées prend une valeur non nulle, alors en ce point toutes les autres distributions prennent une valeur nulle.

Le motif comprend au moins deux maxima locaux de contraste, ce qui signifie que la distribution spatiale de la fonction de contraste présente au moins deux maxima locaux. La distribution spatiale de la fonction de contraste atteint un maximum local en un point où la distribution prend une valeur donnée lorsqu'autour de ce point, la fonction de contraste prend des valeurs inférieures ou égales à cette valeur donnée. Autrement dit la distribution spatiale C (x,y) de la fonction de contraste atteint un maximum local en un point (x₀, y₀) s'il existe un voisinage V du point (x₀, y₀) tel que pour tout élément (x,y) de V, on ait C(x,y) ≤ C(x₀, y₀).

Le motif comprend au moins deux maxima locaux de contraste, les valeurs de ces deux maximas locaux de contraste pouvant être égaux ou différents.

Le motif peut être discret, c'est-à-dire qu'il est formé d'une pluralité de points séparés spatialement. Autrement dit, le motif est constitué de zones de contraste bien localisées et séparées spatialement les uns des autres. La distribution spatiale de la fonction de contraste présente alors des pics séparés correspondant à chacune de ces zones. Un tel motif apparaît optiquement comme formé d'une pluralité de points.

Le motif peut être continu, c'est à dire qu'il est constitué d'une ou plusieurs zones de contraste plus étalées. La distribution spatiale de la fonction de contraste présente alors des plateaux de contraste élevées correspondant à chacune de ces zones de contraste étalées. Un tel motif apparaît optiquement comme formé d'une surface ou d'un ensemble de surfaces.

Le motif s'étend sur une certaine dimension qui est strictement supérieure à la résolution transverse de la figure.

Le procédé comprend une première étape de traitement du motif sur une surface ou dans un volume de la pièce par conformation et focalisation d'un faisceau cohérent, éventuellement pulsé.

Cette première étape consiste à émettre un faisceau lumineux cohérent et à en modifier la répartition spatiale d'énergie dans un plan orthogonal à sa direction de propagation. La répartition spatiale d'énergie du faisceau lumineux dans le plan de la pièce à marquer compose alors un motif laser. L'éclairage de la pièce par le motif laser permet de créer le motif discret ou continu dont toutes les zones de contraste sont traitées en même temps sur la surface ou dans le volume de la pièce à marquer.

### Faisceau cohérent

On utilise une source permettant d'émettre un faisceau lumineux spatialement et temporellement cohérent, tel qu'un faisceau laser. On peut utiliser par exemple une source laser standard, n'ayant pas de spécificité particulière.

Le faisceau lumineux peut être continu ou bien pulsé. Un faisceau pulsé est temporellement composé d'une succession d'impulsions. Par ailleurs, on peut commander l'émission pour que le faisceau soit émis sous forme de trains d'impulsions, que l'on qualifie également de salves ou de tirs. Un train d'impulsions est formé d'un nombre fini d'impulsions du faisceau lumineux.

Le présent système est compatible avec les différents modes de tir existants à l'heure actuelle tels qu'ils ont été présentés dans la demande WO2016001335A.

Dans le cas d'un faisceau pulsé, la durée des impulsions peut être commandée pour valoir de préférence entre 100 femtosecondes (fs) et 1 microseconde (µs).

La gamme de durée d'impulsions [100 fs- 10 picosecondes (ps)] est intéressante pour le marquage du verre et plus généralement des matériaux transparents. Il est ainsi possible de limiter les défauts ou dégâts mécaniques, désignés couramment par le terme anglais 'micro-crack' signifiant « micro-ruptures », qui apparaissent en cas de marquage par impulsion de durée plus longue.

La gamme de durée d'impulsions [10ps - 1 µs] est compatible avec la plupart des sources lumineuses, notamment laser, qui sont largement répandues en milieu industriel. Ces durées d'impulsions sont également compatibles avec des quantités d'énergie importantes qui peuvent être utiles pour marquer certains matériaux d'une figure comportant de nombreux points en un nombre d'impulsions très faible.

L'émission du faisceau lumineux est commandée de préférence pour que chaque impulsion ait une énergie déterminée comprise entre 1 µJ et 100 mJ.

De préférence encore, l'émission du faisceau lumineux est commandée pour que le train d'impulsions délivre une puissance moyenne comprise entre 1 µW et 5000 W.

### Conformation du faisceau par modulation de phase

On prévoit pour mettre le faisceau en forme un modulateur ou dispositif de modulation. Celui-ci permet de moduler spatialement le faisceau lumineux, pour en particulier contrôler la forme de ce faisceau, c'est-à-dire sa répartition spatiale d'énergie optique, afin de créer un motif laser qui en frappant la pièce dans un plan de marquage correspondant au plan de marquage sur le matériau produira un motif discret ou continu. Le modulateur est un élément optique permettant de moduler spatialement le rayonnement optique laser. La modulation utilisée peut concerner l'amplitude et/ou la phase et/ou la polarisation du rayonnement, de manière indépendante ou non. De préférence, on effectuera toujours au moins une modulation de phase, pouvant éventuellement être complétée par une modulation d'amplitude ou modulation de polarisation du rayonnement. De préférence, le modulateur permet de moduler en phase le faisceau lumineux dans le plan du modulateur. Selon des modes particuliers de marquage, une modulation de phase pure est privilégiée.

On définit le plan de modulation comme le plan du modulateur où la grandeur du faisceau laser modulée (amplitude et/ou phase et/ou polarisation) est contrôlée. Ce contrôle dans le plan de modulation est fait secteur par secteur, ou dit autrement pixel par pixel.

La cohérence du faisceau lumineux est maintenue entre l'amont et l'aval du modulateur.

La modulation appliquée au faisceau dans le plan de modulation génère en aval des sous-faisceaux.

On définit le plan de mise en forme comme le plan en configuration de Fourrier avec le plan de modulation.

Les différents sous-faisceaux générés dans le plan de modulation apparaissent selon la répartition spatiale d'énergie optique souhaitée dans le plan de mise en forme.

Autrement dit, le dispositif de modulation introduit dans le plan de modulation une modulation d'une grandeur du faisceau qui produit dans ce plan des sous-faisceaux, ces sous-faisceaux produisant dans le plan de mise en forme, la forme du faisceau souhaitée c'est-à-dire la répartition spatiale d'énergie optique souhaitée. Cette répartition d'énergie apparait comme le motif laser sur le plan de la pièce à traiter.

Un premier type de modulateur utilisable à cet effet correspond aux optiques de mise en forme fixe, et notamment les éléments optiques diffractifs désigné couramment par l'acronyme anglais DOES (« Diffractive Optical Elements » signifiant « éléments optiques diffractifs»). Précisions que dans ce cas la focalisation du faisceau décrite ci-après peut être intégrée au DOE.

Un deuxième type de modulateur utilisable est couramment désigné par l'acronyme anglais SLM (« Spatial Light Modulator » signifiant « Modulateur Spatial de Lumière ») indépendamment de la technologie mise en œuvre pour réaliser ladite modulation. Ce type de modulateur, les technologies sous-jacentes et le type de configuration de mise en œuvre sur le trajet du faisceau optique (configuration d'imagerie ou configuration de Fourrier) sont décrits dans la demande WO2016001335A.

Il est ajouté ici que les modulateurs SLM sont contrôlables, par exemple par logiciel, de sorte à modifier la modulation du faisceau lumineux qui le traverse. Le temps caractéristique pour passer d'une modulation à une autre est typiquement compris entre 1 millisecondes (ms) et 100 ms, correspondant à une fréquence comprise entre 10Hz et 1000 Hz.

### Transport, adaptation et focalisation du faisceau

Le chemin optique avant et après le dispositif de modulation est composé d'un ensemble d'éléments optiques tels qu'ils ont été présentés dans la demande WO2016001335A.

Il est à noter qu'en aval de la modulation, on pourra choisir un ensemble d'éléments pour :
- adapter « virtuellement » les caractéristiques du modulateur, et
- focaliser le rayonnement laser dans un plan de focalisation. Le dispositif de focalisation est généralement défini industriellement par une distance focale, une distance de travail, et un plan focal associé, donnés pour des conditions optiques spécifiques (longueur d'onde, imagerie à l'infini, indice de diffraction et courbure des dioptres). Dans cette description, on entend par plan de focalisation le plan de moindre surface d'un faisceau lumineux, c'est-à-dire le plan où l'énergie lumineuse est la plus concentrée.

On définit le plan de traitement ou plan de travail, comme le plan où le motif à réaliser s'étend et où le traitement de ce motif est réalisé. Il est à noter que d'un motif à un autre, le plan de traitement peut être différent. C'est notamment le cas lorsque la figure s'étend sur une surface qui n'est pas plane. Le plan de traitement peut coïncider ou pas avec le plan de mise en forme et peut coïncider ou pas avec le plan de focalisation.

Lorsque le plan de focalisation correspond au plan mise en forme, la configuration est dite de Fourrier. Lorsque ces plans sont différents, la configuration est dite de Fresnel.

La répartition de l'énergie lumineuse dans le plan de traitement est appelée motif laser.

L'impact du motif laser sur la pièce dans le plan de traitement produit un traitement selon le motif. Le motif n'est pas nécessairement identique au motif laser, lui-même pas nécessairement identique à la répartition spatiale d'énergie créée par le modulateur dans le plan de mise en forme. Sur la pièce, seuls aux endroits du motif laser où l'intensité lumineuse incidente dépasse une certaine intensité seuil de traitement, il y a traitement de la matière de la pièce.

La résolution du motif traité dépend des éléments suivants :
- la puissance du faisceau,
- la taille du faisceau,
- la distribution d'énergie selon le motif laser,
- les propriétés du matériau, et
- la technique et la configuration (éclairages, optiques) utilisée pour la capture de la figure de contraste.

### Cycle de déplacement et de traitement

Une fois la première étape de traitement du motif accomplie, le procédé se poursuit par l'exécution d'au moins un cycle d'étapes suivantes :
-- déplacement relatif du faisceau et de la pièce, et
-- traitement du motif sur la surface ou dans le volume par conformation et focalisation du faisceau.

Le procédé est adapté de sorte que tous les motifs réalisés au cours du procédé ne présentent pas de chevauchement. Autrement dit, la répétition du motif est sans chevauchement, c'est-à-dire, comme il a été vu précédemment, qu'aucune zone de contraste d'une première distribution ne recouvre aucune zone de contraste d'une deuxième distribution.

Il est ainsi de réaliser une figure qui comprend une répétition d'un motif sans chevauchement.

### Déplacement relatif du faisceau et de la cible

Le système pour former une figure peut comprendre un dispositif de déplacement relatif du faisceau et de la pièce de sorte à contrôler et automatiser la position de l'impact du faisceau lumineux sur la pièce à marquer.

Un tel dispositif de déplacement peut être un dispositif de tête scanner galvanométrique. Cette technologie est fondée sur le déplacement mécanique d'optiques (miroirs, prismes, disques, polygones...).

Un tel dispositif de déplacement peut être une platine de translation mécanique motorisée ou un ensemble de plusieurs platines. La pièce à usiner peut être portée par, ou au moins rigidement liée à, cette platine ou ces platines. De cette manière une platine qui se déplace entraîne la pièce à usiner dans son mouvement.

L'utilisation de ces dispositifs mécaniques introduit une limite sur le temps d'exécution de l'étape de déplacement relatif du faisceau et de la pièce. Le déplacement est difficilement réalisé en une durée inférieure à 500 microsecondes (µs), ou implique une installation très coûteuse.

La fréquence de 2 kHz associée à ce temps de déplacement minimal, impacte la cadence de réalisation des motifs dans le procédé de formation de la figure. Ainsi, plus le marquage du motif est assuré par un nombre faible d'impulsions produites par une source lumineuse pulsée, et moins le recours à une source qui émet des trains d'impulsions à des fréquences très supérieures à 2 kHz présente un intérêt pour accélérer le procédé.

Il y a notamment un intérêt à utiliser un procédé où une figure est réalisée en effectuant un cycle de traitement de motif et déplacement relatif lorsqu'il est plus rapide de marquer un motif avec un motif laser et une salve d'impulsion, que de marquer le motif point par point avec un mouvement relatif entre deux marquages de point.

L'exécution de plusieurs cycles de déplacement et de traitement permet de réaliser autant de motifs sur la pièce. Les motifs réalisés sont répartis spatialement selon les déplacements relatifs. Le procédé peut être arrêté lorsque tous les motifs contenus dans la figure sont marqués sur la pièce.

### Nombre d'impulsions par motif

Chaque étape de traitement du motif sur une surface ou dans un volume de la pièce par conformation et focalisation d'un faisceau cohérent pulsé correspond à l'émission d'un train d'impulsions (ou salve d'impulsions ou tir d'impulsions) comprenant une ou plusieurs impulsions du faisceau qui viennent frapper la matière.

La durée de cette étape peut être limitée en utilisant une seule impulsion par traitement. Cela suppose qu'un traitement du motif formé à partir d'une seule impulsion permette d'atteindre le résultat désiré (contraste de marquage, profondeur d'ablation, etc.).

Le résultat du traitement du motif à partir d'une salve comprenant une seule impulsion dépend notamment du matériau formant la pièce, de la quantité d'énergie contenue dans l'impulsion et de la dimension du motif à réaliser et de la longueur d'onde du laser.

A titre d'exemple, si le traitement est un marquage, le contraste est généralement d'autant plus important que la quantité d'énergie contenue dans l'impulsion est importante. Si l'on considère une énergie constante en entrée du dispositif de modulation, alors le contraste est d'autant plus important que le nombre de points du motif est faible et que l'étendue de la surface ou des surfaces formant le motif est faible.

Plus généralement, lorsque le marquage d'un motif est produit par une salve comprenant plusieurs impulsions, le contraste est d'autant plus important que la quantité d'énergie contenue par impulsion est importante et que le nombre d'impulsions dans une salve est grand.

Pour une quantité d'énergie par impulsion donnée en entrée du dispositif de modulation, il peut alors être avantageux de diminuer le nombre de points composant le motif, l'étendue de la surface ou des surfaces formant le motif, pour qu'une seule impulsion produise le motif avec un contraste suffisant.

### Type de figures

La figure à réaliser comprend une répétition d'un motif qui peut être discret ou continu.

Dans le cas où le motif est discret, chaque traitement est un traitement simultané de plusieurs points, c'est-à-dire de plusieurs zones de contraste bien localisées. Un tel traitement peut être désigné sous le terme de « traitement multi-points » et peut être réalisé en divisant le faisceau lumineux laser en plusieurs sous-faisceaux permettant chacun de marquer un des points du motif.

La figure à réaliser comprend une répétition d'un motif, selon une pluralité de décalages prédéterminés.

A chaque étape de déplacement relatif, la pièce est déplacée par rapport au faisceau selon l'un des décalages de la pluralité de décalages prédéterminés.

La figure peut être exactement constituée de la répétition du motif.

Dans ce cas, lorsque le motif est répété n fois dans la figure, la répétition de n étapes de traitement de motif et de (n-1) déplacements relatifs permet d'obtenir la figure finale.

Lorsque le faisceau cohérent est pulsé, une mise en œuvre particulière du procédé consiste à ce que chaque traitement du motif comprend l'émission d'une salve d'au moins une impulsion laser, chaque salve comprenant un nombre d'impulsions laser inférieur au nombre de points formant le motif. De manière préférentielle, chaque salve comprend une seule impulsion laser.

De cette manière, le traitement est plus vite achevé qu'avec un traitement point par point classique présentant la même cadence laser.

### Codes 1D ou 2D

La figure est exactement constituée de la répétition du motif dans le cas où la figure représente un code à une dimension (code à barres) ou un code à deux dimensions (code 2D). Un code 2D est composé d'un ensemble de cellules situées à des positions prédéterminées, certaines cellules étant vides et les autres étant remplies.

On distingue ici le terme de 'codage à deux dimensions' (codage 2D) qui correspond à une organisation d'un ensemble de cellules, chacune devant être soit vide soit remplie, et le terme de "code 2D" qui est une implémentation particulière ou une réalisation particulière d'un codage 2D. Un code 2D est ainsi un choix particulier de cellules vides et de cellules remplies selon l'organisation du codage 2D, et qui traduit le contenu du code.

Certains codages 2D se fondent sur une organisation cartésienne, l'ensemble des cellules étant une matrice carrée ou rectangulaire avec des cellules organisées selon des lignes et des colonnes. C'est par exemple les cas de la datamatrix ou du QR-code.

Il existe d'autres codages 2D dans lesquels les cellules sont organisées sur une base « nid d'abeille » (cas du dot-code ou du maxicode) ou sur une base polaire (cas du shotcode ou du spotcode). L'ensemble des cellules peut par exemple présenter une symétrie centrale.

Pour tous les codages 2D, chaque cellule d'un code 2D est soit vide soit remplie.

Le procédé peut être adapté de sorte que le motif corresponde au contenu d'une cellule remplie. Les cellules remplies sont alors remplies du seul motif. Chaque étape de traitement correspond à la réalisation d'une cellule remplie.

Dans ce cas, entre chacune des étapes de traitement, le déplacement relatif s'opère au moins sur la distance minimale séparant deux cellules voisines dans l'ensemble des cellules du codage 2D.

Comme ces cellules ne se chevauchent pas, chaque déplacement relatif du faisceau et de la pièce s'opère sur une longueur supérieure à une dimension totale du motif.

### Marquage « Brush » ou « Pixel stamp »

Plus généralement, les procédés de formation de la figure dans lesquels le déplacement relatif s'opère toujours sur une longueur supérieure à une dimension totale du motif peuvent être désignés sous le terme de marquage « brush » (c'est-à-dire marquage brosse ou pinceau en français) ou sous le terme équivalent « Pixel stamp » (c'est-à-dire marquage tampon pixel en français) qui est un premier mode de réalisation de l'invention.

Le principe du marquage brush ou marquage Pixel stamp est la décomposition de la figure en une juxtaposition de plusieurs motifs identiques. La figure est alors réalisée par une succession de salves laser, chaque salve étant composée d'une ou plusieurs impulsions laser et préférentiellement composée d'une impulsion laser unique, chaque salve marquant un motif.

La figure 2 représente schématiquement un marquage brush ou marquage Pixel stamp.

Le motif SM1 est composé d'un carré de quatre points alignés selon deux lignes et deux colonnes.

L'ensemble des déplacements relatifs à réaliser est représenté par la matrice D1, chaque croix dans la matrice représentant une position d'un motif à réaliser.

La figure M à réaliser est obtenue en remplaçant chaque croix de la matrice D1 par le motif SM1.

Il est à noter que tout déplacement relatif c'est-à-dire toute distance entre deux croix dans la matrice D1 est d'une longueur supérieure à la taille du motif SM1.

Un avantage à utiliser le marquage brush ou marquage Pixel stamp réside dans le marquage de différents codes 2D d'un même codage 2D. Le motif étant toujours le même à réaliser quels que soient les codes 2D, il n'est pas nécessaire de modifier la conformation du faisceau d'un code 2D à l'autre. En particulier, si on marque différentes pièces, chaque pièce présentant son code 2D particulier, par exemple associé à un numéro de série, il n'est pas utile de modifier la conformation du faisceau d'une pièce à l'autre. Compte-tenu de la relative lenteur introduite par une modification de la conformation, cela permet de mettre en œuvre un marquage individuel d'un grand nombre de pièces qui est plus rapide. On entend par marquage individuel, un marquage où chaque pièce est marquée d'un code 2D unique.

Par ailleurs, la réalisation d'un motif qui est réduit à un remplissage de cellule d'un codage 2D nécessite une énergie relativement faible. Le marquage d'un tel motif peut donc être relativement facilement réalisé à partir d'une seule impulsion du faisceau lumineux. De plus, un grand choix de sources lumineuses peut convenir pour la réalisation d'un tel marquage.

Il est ainsi possible d'atteindre des durées de marquage relativement courtes, typiquement inférieures à la seconde.

Enfin, la taille de la figure n'est pas limitée par la taille du motif, et des figures d'une taille typique de 100 mm x 100 mm peuvent être réalisés.

### Réalisation de datamatrix sur du verre

Il est présenté ici un exemple de marquage d'un code 2D sur des flacons en verre (borosilicate et sodocalcique) à température ambiante en exploitant le marquage « brush » ou « Pixel stamp » dont les conditions sont listées ci-après. Ces flacons peuvent parfois présenter un traitement complémentaire en surface ou dans la masse comme par exemple le dépôt d'une couche de vernis ou d'une couche de peinture qui serait apposée avant la phase de marquage.

Dans cet exemple, l'objectif est le marquage d'un code 2D datamatrix à contenu variable et de taille variable mais typiquement dans une gamme comprise dans les ordres de grandeur 100µm - 10cm.

Dans ce cas d'application, le motif réalisé représente soit un carré composé de quatre points alignés selon deux lignes et deux colonnes, soit un carré de neuf points alignés selon trois lignes et trois colonnes.

Le marquage s'effectue en conformant, à l'aide du modulateur, le faisceau cohérent incident de sorte à définir dans le plan de traitement respectivement quatre ou neuf points, autrement dit quatre ou neuf zones de contraste bien localisées.

La figure 4A représente un motif élémentaire d'un marquage brush ou marquage Pixel stamp selon un carré composé de 2x2 = 4 points, autrement dit de quatre zones de contraste bien localisées.

La figure 4B représente un motif élémentaire d'un marquage brush ou marquage Pixel stamp selon un carré composé de 3x3 = 9 points, autrement dit de neuf zones de contraste bien localisées.

Dans ces figures, la distance entre les points dans le plan de mise en forme peut prendre différentes valeurs dans la gamme des ordres de grandeur de 1 µm à 100 µm.

La source laser utilisée présente les caractéristiques suivantes :
- une durée d'impulsion comprise entre 150 fs et 10 ps, préférentiellement entre 1 ps et 10 ps,
- une longueur d'onde proche IR (InfraRouge) à 1030nm,
- un niveau d'énergie par impulsion de :
   ∘ 200 µJ-300 µJ pour le motif 2x2, et
   ∘ 500 µJ-700 uJ pour le motif élémentaire 3x3;
- chaque motif est marqué en utilisant entre 1 et 10 impulsions laser.

Le déplacement relatif entre le laser et la cible a été obtenu à l'aide de platines de translation placées sous le flacon de verre. Le point d'impact laser est donc fixe dans l'espace.

Des exemples de marquages réalisés, en particulier faisant varier le nombre d'impulsion dans chaque salve laser (de 1 à 10 impulsions) sont visibles sur les représentations 5A à 5E de la figure 5. La représentation 5A correspond à une impulsion, la représentation 5B à deux impulsions, la représentation 5C à trois impulsions, la représentation 5D à cinq impulsions et la représentation 5E à dix impulsions.

Il est à noter que le contraste du marquage augmente lorsque :
- le nombre d'impulsions par salve augmente;
- la quantité d'énergie contenue dans chaque sous-faisceau augmente; et
- le motif s'étend sur une surface plus faible.

La tolérance sur le positionnement de la pièce à marquer le long de l'axe optique apparaît proche de 1 mm. Autrement dit, le motif marqué présente une forme et un contraste satisfaisants, même si la pièce est avancée ou reculée sur un intervalle de 0.5 mm par rapport à la position du plan de mise en forme. Autrement dit, si la distance entre le plan de travail et le plan de mise en forme est inférieure à 0.5 mm, la forme et le contraste du motif traité sont satisfaisants. Cette tolérance de 1 mm apparait significativement supérieure aux solutions connues de marquage de verre.

De plus, la zone de la surface de la pièce entourant les points d'impact laser ne présente pas de dégâts mécaniques, type micro-cracks, qui sont habituellement présents lors du traitement de verre par laser.

### Marquage « Wobbling »

Les procédés de formation de la figure dans lesquels le déplacement relatif s'opère toujours sur une longueur inférieure à une dimension totale du motif peuvent être désignés sous le terme de marquage « wobbling » (c'est-à-dire marquage oscillant en français).

Dans ce deuxième mode de réalisation de l'invention, chaque motif s'étend sur une certaine surface englobante et il y a recouvrement entre des surfaces englobantes de deux motifs successivement réalisés.

La surface englobante sur laquelle s'étend un motif se comprend par exemple comme la surface continue minimale couvrant tous les points du motif, que les points soient répartis de manière discrète ou continue. Autrement dit, la surface englobante sur laquelle s'étend un motif peut être la surface continue minimale couvrant soit tous les points formant le motif, soit la ou les surfaces continues formant le motif.

Le recouvrement des surfaces englobantes de motifs ne signifie pas répétition du motif avec chevauchement. Les motifs correspondants ne se recouvrent pas nécessairement. Par exemple le motif est une distribution spatiale d'une fonction de contraste qui peut être constituée de zones de contraste bien localisées c'est-à-dire d'une pluralité de points séparés. Les points sont séparés spatialement les uns des autres d'au moins une distance minimale de séparation. La distance minimale de séparation est inférieure à une dimension totale, longueur ou largeur, du motif. Elle peut être inférieure à la moitié, au quart, ou encore à 1/10 ou 1/20 de cette dimension totale. S'il est réalisé un deuxième motif, formé d'une deuxième pluralité de points, décalé du premier motif d'une longueur inférieure à la distance minimale de séparation, alors :
- il n'y a pas de recouvrement de points entre la première et la deuxième pluralité de points, et
- il y a un recouvrement des surfaces sur lesquelles s'étendent respectivement le premier et le deuxième motifs.

La figure 3 représente schématiquement un marquage wobbling.

Le motif SM2 est composé d'une pluralité de points discrets répartis sur un carré, dont la surface est très proche de celle de la figure.

L'ensemble des déplacements relatifs à réaliser est représenté par la matrice D2, chaque croix dans la matrice représentant une position d'un motif à réaliser. La matrice D2 comprend quatre croix réparties selon deux lignes et deux colonnes.

La figure M à réaliser est obtenue en remplaçant chaque croix de la matrice D2 par le motif SM2.

Il est à noter que tout déplacement relatif, c'est-à-dire toute distance entre deux croix dans la matrice D2, est d'une longueur inférieure à la taille du motif SM2 et d'une longueur inférieure à la distance minimale qui sépare deux points dans le motif M2.

Le marquage wobbling est adapté à des cas où la figure et donc le motif est d'une taille relativement importante, c'est-à-dire lorsque le nombre de points formant le motif est important, ou lorsque l'étendue de la surface ou des surfaces formant le motif est importante. Le marquage wobbling peut correspondre à des tailles de motif plus importantes que le marquage brush ou marquage Pixel stamp, et dans ce cas peut rendre le procédé de formation de la figure plus rapide que le marquage brush ou marquage Pixel stamp. En effet selon la taille de la figure et la cadence du laser utilisé, le temps nécessaire à l'émission d'une salve laser peut être plus court que celui nécessaire à un déplacement relatif, de sorte que le temps de marquage complet est d'autant plus court que le nombre de déplacement relatifs est faible. En revanche, une énergie par impulsion plus importante est a priori requise pour obtenir le même contraste car le motif comporte alors plus de points à marquer. Il est à noter qu'il est également a priori possible d'augmenter le nombre d'impulsions par salve de traitement sans augmenter significativement le temps de fabrication. Les termes 'significativement inférieur' ou 'significativement inférieur' peuvent être compris ici respectivement comme 10 fois supérieur ou 10 fois inférieur.

Un avantage à utiliser ce type de marquage réside dans le marquage d'un même code 2D sur différentes pièces.

A partir du code 2D formant la figure, sont identifiées les positions des cellules remplies. Le contenu d'une cellule remplie est divisé selon une répétition d'un même fragment, de sorte que le remplissage de la cellule est constitué de la seule répétition de ce fragment.

Le motif est choisi comme la répétition du fragment aux différentes positions identifiées. De cette manière à chaque étape de traitement, un fragment de chaque cellule remplie de la figure est marqué sur la pièce. Les déplacements relatifs entre deux étapes de micro-usinage s'opèrent alors sur une distance permettant de passer d'un fragment à un autre, c'est-à-dire sur une distance inférieure à la dimension du motif, et même à la dimension d'une cellule. A chaque nouveau traitement, un nouveau fragment est réalisé dans chaque cellule. Lorsque le nombre de traitements réalisés est égal au nombre de fragments répétés dans une cellule remplie, la figure est réalisée.

Le nombre d'étapes de traitements nécessaires pour l'obtention de la figure est donc égal au nombre de répétitions du fragment dans le remplissage d'une cellule. Ce nombre de répétitions peut aisément être adapté.

Entre deux pièces à marquer avec le même code 2D, il n'est pas nécessaire, bien que possible, de modifier la conformation du modulateur, le motif étant le même pour chacune de ces pièces.

Par ailleurs, la réalisation d'un tel motif plus petit, ou comportant moins de points (dans le cas de figures composés d'une pluralité de points) que la figure finale nécessite une énergie moindre par rapport à un marquage de la figure finale sans décomposition par motif (dans une proportion sensiblement voisine du nombre de fragment répétés dans une cellule remplie). Le marquage d'un tel motif peut être réalisé à partir d'une seule impulsion du faisceau lumineux. De plus, un grand choix de sources lumineuses peut convenir pour la réalisation d'un tel marquage.

Il est ainsi possible d'atteindre des durées de marquage relativement courtes, typiquement inférieures à la seconde.

Enfin, la taille de la figure finale n'est pas limitée par la taille du motif.

### Répétition d'un deuxième motif

La figure peut comprendre, en plus de la répétition d'un premier motif, la répétition d'un deuxième motif.

Ce deuxième motif comprend également au moins deux maximas locaux de contraste, et peut être discret ou continu.

Dans ce cas, le procédé peut comprendre en outre l'exécution des étapes suivantes :
- traitement du deuxième motif sur une surface ou dans un volume de la pièce par conformation et focalisation d'un faisceau cohérent pulsé ;
- exécution d'au moins un cycle d'étapes suivantes :
   -- déplacement relatif du faisceau et de la pièce, et
   -- traitement du deuxième motif sur la surface ou dans le volume par conformation et focalisation du faisceau.

Le procédé mis en œuvre pour réaliser la répétition du premier motif dans la figure est mis en œuvre une seconde fois et adapté pour réaliser cette fois la répétition du deuxième motif.

Dans cette situation, il est nécessaire de modifier la conformation du modulateur, entre la réalisation du premier motif et la réalisation du second motif.

Il est à noter que le procédé peut être modifié davantage encore, sur la même base, pour réaliser d'autres répétitions d'un (ou plusieurs) motif additionnel.

### Calcul d'une consigne de modulation

Dans l'art antérieur, il est mentionné la mise en forme de faisceau selon des formes de faisceau préétablies, voire fixes. Autrement dit, le motif qu'il est possible de marquer doit être choisi parmi un nombre limité de formes de motifs possibles. Les motifs qu'il est possible de marquer sont donc limités dans leur forme, limitant par extension les possibilités de figures et/ou le temps de marquage associé.

L'utilisation d'un modulateur SLM permet de modifier la forme du motif, et ce même pendant le procédé de formation de la figure elle-même. Cette modification peut être dynamique.

Il est en particulier possible d'intégrer un logiciel de pilotage qui traite en arrière-plan toutes les notions mathématiques requises permettant de transférer le motif souhaité par l'utilisateur en motif laser au travers d'une lentille de focalisation en exploitation le dispositif de modulation. Le motif laser situé dans le plan de travail, à travers son équivalent dans le plan de mise en forme, c'est-à-dire la répartition spatiale d'énergie lumineuse, peut être défini de sorte à n'être composé que d'une pluralité de sous-faisceaux à la manière d'une image pixellisée (chaque pixel de cette forme laser représente alors un point d'impact ou une surface d'impact laser possible, activable à souhait par l'opérateur). Cette approche facilite notamment la maîtrise de l'interaction laser matière, mais aussi la compréhension par l'utilisateur final de transformer simplement son unique faisceau usuel en une pluralité de sous-faisceaux.

Il est ainsi possible d'ajouter au procédé de formation de la figure, tel qu'on a pu le présenter jusqu'à présent, une étape de calcul d'une consigne de modulation à partir d'une consigne d'entrée correspondant à une nouvelle forme de motif souhaitée, par exemple un deuxième motif répété dans la figure. La consigne de modulation est imposée au dispositif de modulation pour effectuer la conformation du faisceau. Cette conformation est une conformation dynamique du faisceau lumineux.

L'étape d'envoi de la consigne d'entrée et/ou l'étape de calcul peuvent être exécutées alors que le procédé de formation est en cours.

### Motif supplémentaire non répété

La figure peut comprendre, en plus de la répétition du premier motif, un ou plusieurs motifs supplémentaires qui n'apparaissent pas de manière répétée dans la figure.

Chaque motif supplémentaire peut en particulier être formé d'une pluralité de points. Dans ce cas, le procédé peut comprendre en outre le traitement du motif supplémentaire sur une surface ou dans un volume de la pièce par conformation et focalisation d'un faisceau cohérent pulsé, la formation du motif supplémentaire sur la pièce comprend l'émission d'un train d'impulsions du faisceau lumineux, chaque train comprenant un nombre fini d'impulsions strictement inférieur au nombre de points formant le motif supplémentaire.

Ce type de marquage qui n'est pas fondé sur la répétition d'un motif a été présenté en détail dans la demande WO2016001335A. Il est désigné dans la suite du texte sous le terme de marquage « tampon ».

Un tel procédé permettant de marquer à la fois la répétition d'un motif et un motif supplémentaire non répété dans la figure peut être utilisé notamment dans la réalisation de QR-codes sécurisés. Ce procédé constitue un troisième mode de réalisation de l'invention.

### Réalisation d'un QR-code sécurisé sur un polymère

Un QR-code sécurisé est un QR-code à l'intérieur duquel sont intégrés un ou plusieurs codes propriétaires, par exemple des marquages propriétaires sécurisés décrits dans la demande WO2010034897A1, afin de sécuriser l'ensemble du QR-code.

La figure 6 représente un QR-code comprenant trois marquages propriétaires sécurisés, et la figure 7 est une vue en détail d'un de ces marquages sécurisés.

Il est présenté ici un exemple de réalisation de ce QR-code sur une pièce en polymères (POLYAMIDE 6 et Polycarbonate) à température ambiante. Le code 2D de type QR-code peut présenter un contenu variable et est de taille typique comprise entre 1 et 10 cm.

Dans cet exemple, chaque marquage propriétaire sécurisé est réalisé en utilisant un mode proche du marquage tampon et le reste de la figure est marqué en mode marquage brush ou marquage Pixel stamp.

Compte tenu du temps cible du marquage complet (inférieur à une seconde), du comportement du matériau sous irradiation laser, ainsi que des limitations des lasers disponibles actuellement, ces marquages propriétaires sécurisés ne peuvent pas être marqués par un seul marquage tampon. Ainsi, dans cet exemple, chaque marquage propriétaire sécurisé est lui-même découpé en quatre sous-ensembles de sorte que :
- chaque point du marquage est marqué en utilisant un sous-faisceau laser, et
- chaque point du marquage n'appartient qu'à un unique sous-ensemble.

Chaque sous-ensemble est ainsi marqué par marquage tampon, de préférence avec une impulsion laser unique. Le marquage propriétaire sécurisé complet est donc marqué par un enchevêtrement de quatre marquages tampons.

Le reste de la figure est obtenu par un marquage brush ou marquage Pixel stamp utilisant un seul motif. Ce motif s'étend sur un carré et peut être marqué par un total de 16x16 = 256 sous-faisceaux. La distance dans le plan de mise en forme d'un centre de sous-faisceau à un centre de sous-faisceau voisin peut prendre différentes valeurs. Dans le cas optimisé cette distance est de 25 µm.

La figure 8 représente une réalisation du QR-code représenté en figure 6, et la figure 9 une réalisation du marquage propriétaire sécurisé représenté en figure 7.

Dans cet exemple, la source lumineuse utilisée est une source laser présentant les caractéristiques suivantes :
- une durée d'impulsions de 7 ns,
- une longueur d'onde visible (532 nm),
- une énergie par impulsion de 5 mJ, et
- des salves comportant 1 à 2 impulsions laser.

### Système pour former une figure sur une pièce

Il est proposé également un système de traitement permettant de traiter des matériaux selon le procédé présenté précédemment.

Un tel système est adapté pour former une figure sur ou dans une pièce, la figure comprenant une répétition d'un motif, le système comprenant :
- un dispositif de réalisation du motif à la surface ou dans le volume de la pièce par conformation et focalisation d'un faisceau cohérent, le motif comprenant au moins deux maxima locaux de contraste ;
- un dispositif de déplacement relatif du faisceau et de la pièce

La figure 1 représente schématiquement un mode de réalisation d'un tel système 1.

Le dispositif de déplacement relatif du faisceau et de la pièce est référencé 5 en figure 1.

Le système 1 comprend le dispositif de réalisation du motif à la surface ou dans le volume de la pièce par conformation et focalisation d'un faisceau cohérent qui comprend lui-même :
- une source 2 d'un faisceau lumineux cohérent 8A, comme une source laser,
- un dispositif de modulation optique 3 comprenant des moyens pour moduler 4 dans un plan de modulation le faisceau lumineux selon au moins une modulation de phase, afin de conformer le faisceau lumineux selon un motif laser ;
- un dispositif de focalisation 7 agencé pour focaliser le faisceau lumineux conformé par le dispositif de modulation dans un plan de focalisation, le plan de focalisation étant en configuration de Fourrier ou de Fresnel par rapport au plan de modulation du dispositif de modulation.

Le système est adapté pour recevoir une pièce à traiter, de sorte que la réalisation du motif à la surface ou dans le volume s'effectue dans un plan de traitement, le plan de traitement étant séparé du plan de focalisation d'une distance inférieure ou égale à la moitié d'une distance focale du dispositif de focalisation,
le motif laser étant configuré pour produire un traitement de la pièce selon le motif dans le plan de traitement.

Le faisceau laser peut être pulsé.

Le dispositif de modulation optique peut être un SLM dynamique ou bien une optique de mise en forme fixe.

Le dispositif de modulation optique et le dispositif de focalisation peuvent être regroupés en un appareil unique.

Le dispositif de déplacement relatif peut être un dispositif de tête scanner galvanométrique ou bien un ensemble de platines de translation.

Le dispositif de déplacement peut être placé dans le trajet du faisceau, comme schématisé dans la figure 1, ou bien sous la pièce.

La configuration de Fourier a été décrite dans la demande WO2016001335A1.

En sortie du dispositif de modulation 3, le faisceau lumineux 8B est mis en forme selon le motif laser pour produire le motif 11 dans le plan de traitement où se trouve le motif à réaliser sur la surface ou dans le volume de la pièce 9 à marquer. Ce plan de traitement se situe au voisinage du plan de focalisation du faisceau laser, c'est-à-dire que le plan de traitement est séparé du plan de focalisation d'une distance inférieure ou égale à la moitié d'une distance focale du dispositif de focalisation, le dispositif de focalisation définissant la position du plan de focalisation.

Le système peut comprendre également une électronique de contrôle du dispositif de modulation et/ou de la source du faisceau lumineux et/ou la gestion d'une base de données et/ou l'interfaçage graphique pour la communication avec l'opérateur ou les autres éléments constitutifs de l'installation de traitement. Des formes de motif peuvent être enregistrées dans une base de données.

Le système peut en outre comprendre un calculateur de consigne de modulation à partir d'une consigne d'entrée correspondant à une forme de motif souhaitée.

## Revendications

1. Procédé pour réaliser une figure, à une surface ou dans un volume d'une pièce (9), la figure comprenant une répétition d'un motif (11), le procédé comprenant les étapes suivantes :
- réalisation du motif (11) à la surface ou dans le volume de la pièce (9) par conformation et focalisation d'un faisceau cohérent (8A), le motif étant situé sur une surface non parallèle à une direction de propagation du faisceau, le motif comprenant au moins deux maxima locaux de contraste;
- exécution au moins une fois d'un cycle d'étapes suivantes:
-- déplacement relatif du faisceau et de la pièce, et
-- réalisation du motif (11) à la surface ou dans le volume par conformation et focalisation du faisceau, de sorte que les motifs réalisés ne présentent pas de chevauchement.

2. Procédé selon la revendication 1 dans lequel le motif est formé d'une pluralité de points séparés spatialement.

3. Procédé selon la revendication 2 dans lequel le faisceau cohérent est pulsé, chaque réalisation du motif comprenant l'émission d'une salve d'au moins une impulsion laser, chaque salve comprenant un nombre d'impulsions laser inférieur au nombre de points formant le motif, chaque salve comprenant de préférence une seule impulsion laser.

4. Procédé selon l'une des revendications précédentes dans lequel la figure représente un code à une ou deux dimensions composé d'un ensemble de cellules vides et de cellules remplies, les cellules étant situées à des positions prédéterminées, les cellules remplies comprenant de préférence une ou plusieurs fois le motif.

5. Procédé selon l'une des revendications précédentes dans lequel le déplacement relatif du faisceau et de la pièce s'opère sur une longueur supérieure à une dimension du motif ou le déplacement relatif du faisceau et de la pièce s'opère sur une longueur inférieure à une dimension du motif.

6. Procédé selon l'une des revendications précédentes dans lequel la figure comprend une répétition d'un deuxième motif, le deuxième motif comprenant au moins deux maxima locaux de contraste, le procédé comprenant en outre l'exécution des étapes de la revendication 1 adaptées pour réaliser la répétition du deuxième motif.

7. Procédé selon l'une des revendications précédentes dans lequel la figure comprend un motif supplémentaire formé d'une pluralité de points, le procédé comprenant en outre la réalisation du motif supplémentaire sur la surface ou dans le volume de la pièce par conformation et focalisation d'un faisceau cohérent pulsé, dans lequel la réalisation du motif supplémentaire sur ou dans la pièce comprend l'émission d'un train d'impulsions du faisceau lumineux, chaque train comprenant un nombre fini d'impulsions strictement inférieur au nombre de points formant le motif supplémentaire.

8. Procédé selon l'une des revendications précédentes dans lequel la pièce est en verre, en métal, en plastique ou en polymère.

9. Procédé selon l'une des revendications 1 à 8 comprenant lors de la réalisation du motif une altération par exposition au laser d'une première couche de matériau de sorte à découvrir une deuxième couche située en dessous de la première couche.

10. Procédé selon l'une des revendications précédentes, dans lequel la réalisation du motif à la surface ou dans le volume s'effectue dans un plan de traitement, le plan de traitement étant séparé d'un plan de focalisation du faisceau laser d'une distance inférieure ou égale à la moitié d'une distance focale d'un dispositif de focalisation, le dispositif de focalisation définissant la position du plan de focalisation.

11. Procédé selon l'une des revendications précédentes, comprenant en outre une étape de calcul d'une consigne de modulation à partir d'une consigne d'entrée correspondant au motif, la consigne de modulation étant imposée à un dispositif de modulation pour effectuer la conformation du faisceau.

12. Système pour réaliser une figure à une surface ou dans un volume d'une pièce, la figure comprenant une répétition d'un motif, le système comprenant :
- un dispositif de réalisation du motif à la surface ou dans le volume de la pièce par conformation et focalisation d'un faisceau cohérent, le motif comprenant au moins deux maxima locaux de contraste, le motif étant situé sur une surface non parallèle à une direction de propagation du faisceau ; et
- un dispositif de déplacement relatif du faisceau et de la pièce.

13. Système selon la revendication 12 dans lequel le dispositif de réalisation du motif à la surface ou dans le volume de la pièce par conformation et focalisation d'un faisceau cohérent comprend :
- une source d'un faisceau lumineux cohérent, le faisceau laser étant de préférence pulsé ;
- un dispositif de modulation optique comprenant des moyens pour moduler dans un plan de modulation le faisceau lumineux selon au moins une modulation de phase, afin de conformer le faisceau lumineux selon un motif laser;
- un dispositif de focalisation agencé pour focaliser le faisceau lumineux conformé par le dispositif de modulation dans un plan de focalisation, le plan de focalisation étant en configuration de Fourier ou de Fresnel par rapport au plan de modulation du dispositif de modulation,
le système étant adapté pour recevoir la pièce, de sorte que la réalisation du motif à la surface ou dans le volume s'effectue dans un plan de traitement, le plan de traitement étant séparé du plan de focalisation d'une distance inférieure ou égale à la moitié d'une distance focale du dispositif de focalisation,
le motif laser étant configuré pour produire un traitement de la pièce selon le motif dans le plan de traitement.

14. Système selon l'une des revendications 12 à 13, dans lequel le dispositif de modulation optique comprend une optique de mise en forme fixe, le dispositif de modulation optique et le dispositif de focalisation étant de préférence regroupés en un appareil unique.

15. Système selon l'une des revendications 12 à 14, dans lequel le dispositif de déplacement relatif comprend une tête scanner galvanométrique.

16. Système selon l'une des revendications 12 à 14, dans lequel le dispositif de déplacement relatif comprend au moins une platine de translation.

17. Pièce comportant une figure réalisée par le procédé selon l'une des revendications 1 à 11.

## Patentansprüche

1. Verfahren zur Erzeugung eines Bildes auf einer Oberfläche oder in einem Volumen eines Teils (9), wobei das Bild eine Wiederholung eines Motivs (11) umfasst, wobei das Verfahren die folgenden Schritte umfasst:
- Erzeugen des Motivs (11) auf der Oberfläche oder in dem Volumen des Teils (9) durch Anpassen und Fokussieren eines kohärenten Strahls (8A), wobei sich das Motiv auf einer Oberfläche befindet, die nicht parallel zu einer Ausbreitungsrichtung des Strahls verläuft, wobei das Motiv mindestens zwei lokale Kontrastmaxima aufweist;
- Ausführen mindestens einmal eines Zyklus aus folgenden Schritten:
-- relative Verschiebung des Strahls und des Teils, und
-- Erzeugen des Motivs (11) auf der Oberfläche oder in dem Volumen durch Anpassen und Fokussieren des Strahls, so dass sich die erzeugten Motive nicht überlappen.

2. Verfahren nach Anspruch 1, wobei das Motiv aus einer Vielzahl räumlich getrennter Punkte gebildet wird.

3. Verfahren nach Anspruch 2, wobei der kohärente Strahl gepulst wird, wobei jede Erzeugung des Motivs das Senden einer Salve aus mindestens einem Laserimpulse umfasst, wobei jede Salve eine Anzahl von Laserimpulsen umfasst, die kleiner als die Anzahl der Punkte ist, die das Motiv bilden, wobei jede Salve vorzugsweise einen einzigen Laserimpuls umfasst.

4. Verfahren nach einem der vorhergehenden Ansprüche, wobei das Bild einen ein- oder zweidimensionalen Code darstellt, der aus einer Anordnung leerer Zellen und gefüllter Zellen besteht, wobei sich die Zellen an vorbestimmten Positionen befinden, wobei die gefüllten Zellen das Motiv vorzugsweise ein- oder mehrmals umfassen.

5. Verfahren nach einem der vorhergehenden Ansprüche, wobei die relative Verschiebung des Strahls und des Teils über eine Länge erfolgt, die größer als eine Dimension des Motivs ist oder die relative Verschiebung des Strahls und des Teils über eine Länge erfolgt, die kleiner als eine Dimension des Motivs ist.

6. Verfahren nach einem der vorhergehenden Ansprüche, wobei das Bild eine Wiederholung eines zweiten Motivs umfasst, wobei das zweite Motiv mindestens zwei lokale Kontrastmaxima umfasst, wobei das Verfahren ferner die Ausführung der Schritte von Anspruch 1 umfasst, die zur Durchführung der Wiederholung des zweiten Motivs geeignet sind.

7. Verfahren nach einem der vorhergehenden Ansprüche, wobei das Bild ein zusätzliches Motiv umfasst, das aus einer Vielzahl von Punkten gebildet ist, wobei das Verfahren ferner das Erzeugen des zusätzlichen Motivs auf der Oberfläche oder in dem Volumen des Teils durch Anpassen und Fokussieren eines gepulsten kohärenten Strahls umfasst, wobei das Erzeugen des zusätzlichen Motivs auf oder in dem Teil das Senden einer Impulsfolge des Lichtstrahls umfasst, wobei jede Folge eine endliche Anzahl von Impulsen umfasst, die strikt kleiner als die Anzahl der Punkte ist, die das zusätzliche Motiv bilden.

8. Verfahren nach einem der vorhergehenden Ansprüche, wobei das Teil aus Glas, Metall, Kunststoff oder Polymer besteht.

9. Verfahren nach einem der Ansprüche 1 bis 8, umfassend während der Erzeugung des Motivs eine Veränderung einer ersten Materialschicht durch Laserbelichtung, um eine unter der ersten Schicht liegende zweite Schicht freizulegen.

10. Verfahren nach einem der vorhergehenden Ansprüche, wobei die Erzeugung des Motivs auf der Oberfläche oder in dem Volumen in einer Bearbeitungsebene erfolgt, wobei die Bearbeitungsebene von einer Fokussierebene des Laserstrahls durch einen Abstand getrennt ist, der kleiner oder gleich der halben Brennweite einer Fokussiervorrichtung ist, wobei die Fokussiervorrichtung die Position der Fokussierebene definiert.

11. Verfahren nach einem der vorhergehenden Ansprüche, ferner umfassend einen Schritt der Berechnung eines Modulationssollwerts aus einem dem Motiv entsprechenden Eingangssollwert, wobei der Modulationssollwert einer Modulationsvorrichtung zur Strahlanpassung vorgegeben wird.

12. System zur Erzeugung eines Bildes auf einer Oberfläche oder in einem Volumen eines Teils, wobei das Bild eine Wiederholung eines Motivs umfasst, wobei das System umfasst:
- eine Vorrichtung zur Erzeugung des Motivs auf der Oberfläche oder in dem Volumen des Teils durch Anpassen und Fokussieren eines kohärenten Strahls, wobei das Motiv mindestens zwei lokale Kontrastmaxima umfasst, wobei sich das Motiv auf einer Oberfläche befindet, die nicht parallel zu einer Ausbreitungsrichtung des Strahls verläuft; und
- eine Vorrichtung zur relativen Verschiebung des Strahls und des Teils.

13. System nach Anspruch 12, wobei die Vorrichtung zur Erzeugung des Motivs auf der Oberfläche oder in dem Volumen des Teils durch Anpassen und Fokussieren eines kohärenten Strahls umfasst:
- eine Quelle eines kohärenten Lichtstrahls, wobei der Laserstrahl vorzugsweise gepulst ist;
- eine optische Modulationsvorrichtung, die Mittel zum Modulieren des Lichtstrahls in einer Modulationsebene gemäß mindestens einer Phasenmodulation umfasst, um den Lichtstrahl gemäß einem Lasermotiv anzupassen;
- eine Fokussiervorrichtung, die eingerichtet ist, um den von der Modulationsvorrichtung angepassten Lichtstrahl in einer Fokussierebene zu fokussieren, wobei die Fokussierebene in Fourier- oder Fresnel-Konfiguration relativ zur Modulationsebene der Modulationsvorrichtung ist,
wobei das System geeignet ist, das Teil aufzunehmen, so dass die Erzeugung des Motivs auf der Oberfläche oder in dem Volumen in einer Bearbeitungsebene erfolgt, wobei die Bearbeitungsebene von der Fokussierebene durch einen Abstand getrennt ist, der kleiner oder gleich der Hälfte einer Brennweite der Fokussiervorrichtung ist,
wobei das Lasermotiv dazu konfiguriert ist, eine Bearbeitung des Teils gemäß dem Motiv in der Bearbeitungsebene zu erzeugen.

14. System nach einem der Ansprüche 12 bis 13, wobei die optische Modulationsvorrichtung eine feste Formungsoptik umfasst, wobei die optische Modulationsvorrichtung und die Fokussiervorrichtung vorzugsweise zu einer einzigen Apparatur kombiniert sind.

15. System nach einem der Ansprüche 12 bis 14, wobei die Vorrichtung zur relativen Verschiebung einen galvanometrischen Scannerkopf umfasst.

16. System nach einem der Ansprüche 12 bis 14, wobei die Vorrichtung zur relativen Verschiebung mindestens eine Translationsplatte umfasst.

17. Teil, das ein Bild aufweist, das durch das Verfahren nach einem der Ansprüche 1 bis 11 erzeugt wird.

## Claims

1. A method for producing a figure on a surface or within the volume of a workpiece (9), the figure comprising a repetition of a pattern (11), the method comprising the following steps:
- forming the pattern (11) on the surface or within the volume of the workpiece (9) by shaping and focusing a coherent beam (8A), the pattern being located on a surface not parallel to a direction of propagation of the beam , the pattern comprising at least two local maxima of contrast;
- performing at least once a cycle of the following steps:
-- relative movement of the beam and the workpiece, and
-- forming the pattern (11) on the surface or within the volume by shaping and focusing the beam, such that the formed patterns do not overlap.

2. A method according to claim 1, wherein the pattern is formed of a plurality of spatially separated points.

3. A method according to claim 2, wherein the coherent beam is pulsed, each formation of the pattern comprising the emission of a burst of at least one laser pulse, each burst comprising a number of laser pulses less than the number of points forming the pattern, each burst preferably comprising a single laser pulse.

4. A method according to one of the preceding claims, wherein the figure represents a one- or two-dimensional code composed of a set of empty cells and filled cells, the cells being located at predetermined positions, the filled cells preferably comprising the pattern once or more times.

5. A method according to one of the preceding claims, wherein the relative movement of the beam and the workpiece takes place over a length greater than one dimension of the pattern, or the relative movement of the beam and the workpiece takes place over a length less than one dimension of the pattern.

6. A method according to one of the preceding claims, wherein the figure comprises a repetition of a second pattern, the second pattern comprising at least two local contrast maxima, the method further comprising performing the steps of claim 1 adapted to realise the repetition of the second pattern.

7. A method according to one of the preceding claims, wherein the figure comprises an additional pattern formed of a plurality of points, the method further comprising forming the additional pattern on the surface or within the volume of the workpiece by shaping and focusing a pulsed coherent beam, wherein forming the additional pattern on or within the workpiece comprises emitting a pulse train of the light beam, each train comprising a finite number of pulses strictly less than the number of dots forming the additional pattern.

8. A method according to one of the preceding claims, wherein the workpiece is made of glass, metal, plastic or polymer.

9. A method according to any one of claims 1 to 8, comprising, during the formation of the pattern, altering a first layer of material by laser exposure so as to expose a second layer located beneath the first layer.

10. A method according to one of the preceding claims, wherein the formation of the pattern on the surface or within the volume takes place in a processing plane, the processing plane being separated from a focal plane of the laser beam by a distance less than or equal to half the focal length of a focusing device, the focusing device defining the position of the focal plane.

11. A method according to one of the preceding claims, further comprising a step of calculating a modulation setpoint from an input setpoint corresponding to the pattern, the modulation setpoint being applied to a modulation device to shape the beam.

12. A system for forming a figure on a surface or within a volume of a workpiece, the figure comprising a repetition of a pattern, the system comprising:
- a device for forming the pattern on the surface or within the volume of the workpiece by shaping and focusing a coherent beam, the pattern comprising at least two local maxima of contrast, the pattern being situated on a surface not parallel to a direction of propagation of the beam; and
- a device for the relative movement of the beam and the workpiece.

13. A system according to claim 12, wherein the device for forming the pattern on the surface or within the volume of the workpiece by shaping and focusing a coherent beam comprises:
- a source of a coherent light beam, the laser beam preferably being pulsed;
- an optical modulation device comprising means for modulating the light beam in a modulation plane according to at least one phase modulation, in order to shape the light beam into a laser pattern;
- a focusing device arranged to focus the light beam shaped by the modulation device in a focal plane, the focal plane being in a Fourier or Fresnel configuration relative to the modulation plane of the modulation device,
the system being adapted to receive the workpiece, such that the pattern is formed on the surface or within the volume in a processing plane, the processing plane being separated from the focal plane by a distance less than or equal to half the focal length of the focusing device,
the laser pattern being configured to produce processing of the workpiece according to the pattern in the processing plane.

14. A system according to one of claims 12 to 13, wherein the optical modulation device comprises a fixed shaping optical element, the optical modulation device and the focusing device preferably being combined into a single unit.

15. A system according to one of claims 12 to 14, wherein the relative displacement device comprises a galvanometric scanning head.

16. A system according to any one of claims 12 to 14, wherein the relative displacement device comprises at least one translation stage.

17. A workpiece comprising a pattern produced by the method according to one of claims 1 to 11.
